# EUROPÄISCHE PATENTSCHRIFT

(11) **EP 0 553 482 B1**
(45) Veröffentlichungstag und Bekanntmachung des Hinweises auf die Patenterteilung: **08.03.1995**
(21) Anmeldenummer: 92121754.3
(22) Anmeldetag: 22.12.1992
(51) Int. Cl.: A47L 9/24

(54) **Teleskopierbares Staubsauger-Saugrohr**
Telescopic vacuum cleaner suction hose
Tuyau de succion téléscopique pour un aspirateur

(30) Priorität: 11.01.1992 DE 4200526
(43) Veröffentlichungstag der Anmeldung: 04.08.1993
(73) Patentinhaber: Carl Froh Röhrenwerk GmbH & Co, D-59846 Sundern, Sauerland (DE)
(72) Erfinder: Cordes, August, W-5768 Sundern-Hachen (DE)
(74) Vertreter: Patentanwälte Ostriga & Sonnet

(56) Entgegenhaltungen:
- EP-A- 0 399 177
- DE-C- 3 718 578
- US-A- 3 351 363

## Beschreibung

Die Erfindung betrifft ein teleskopierbares Staubsauger-Saugrohr nach dem Oberbegriff des Patentanspruchs 1.

Ein derartiges Staubsauger-Saugrohr ist bereits aus der DE-C-37 18 578 bekannt. Auf vorteilhafte Weise ist es bei diesem Stand der Technik möglich, ein Innen- und ein Außenrohr über eine Befestigungs- bzw. Betätigungsvorrichtung axial lösbar miteinander zu arretieren. Die Arretierung von Innen- und Außenrohr kann mittels Fingerdruck auf einen am Außenrohr längsverschieblich gehaltenen, federbelasteten Schieber aufgehoben werden, indem der Schieber aus der unbelasteten Ruhelage - die zugleich der Verriegelungsstellung entspricht - durch Fingerdruck in eine ganz bestimmte axiale Richtung verschoben wird. Nach der Entlastung des Schiebers vom Fingerdruck gleitet dieser durch Federkraft wieder in seine ursprüngliche Verriegelungsstellung zurück. Der Schieber besteht bei diesem Stand der Technik aus einem Betätigungsansatz sowie einer Handhabe, die nach dem Zusammenbau von Innen- und Außenrohr sowie Führungskörper durch eine fensterartige Öffnung im Außenrohr hindurch mit dem Betätigungsansatz verrastet wird. Zu diesem Zweck weist die Handhabe Federzungen auf, die mit dem Betätigungsansatz unverlierbar verrastet werden. Durch diese Verrastung werden zugleich beide Rohre fest miteinander verriegelt.

In der Alltagspraxis hat sich nun bei der Verwendung der bekannten Staubsaugerrohre herausgestellt, daß durch unsachgemäße Behandlung - z.B. durch Fallenlassen des Staubsaugerrohres - es häufig zu einer Beschädigung oder sogar zu einem Abbrechen der aus dem Außenrohr herausragenden Handhabe kommt. Bei einem völligen Abbrechen der Handhabe ist aber die durch die Verrastung von Handhabe und Betätigungsansatz erfolgte Verriegelung der beiden Rohre aufgehoben. Des weiteren hat sich im Falle einer Beschädigung der Handhabe und des notwendigen Austausches herausgestellt, daß das Auswechseln der Handhabe nur schwierig möglich ist.

Aufgabe der Erfindung ist es daher, eine neue Art der Verriegelung des innenliegenden Führungskörpers mit dem aufgeweiteten Außenrohr zu schaffen, bei der die Verriegelung von Innen- und Außenrohr jederzeit gewährleistet ist und zugleich auch der Austausch der Handhabe vereinfacht wird.

Die Lösung der Aufgabe ergibt sich aus den Merkmalen des Patentanspruchs 1.

Die erfindungsgemäße Verriegelung zwischen dem Führungskörper und dem Außenrohr geschieht nunmehr nicht mittels elastischer an der Unterseite der Handhabe angeordneter Federzungen, sondern kann auf vorteilhafte Weise starr und stabil ausgeführt werden. Dies ist dadurch möglich, daß der an der Handhabe angeordnete starre Fortsatz Hinterschneidungsflächen aufweist, die den Rand der fensterartigen Öffnung im Außenrohr hintergreifen. Dadurch ergibt sich einerseits eine wesentlich stabilere Verbindung zwischen Handhabe und Betätigungsansatz und andererseits ist die axiale Verriegelung von Innen- und Außenrohr jederzeit garantiert. Dies stellt selbst in dem Fall, daß ein Staubsaugerrohr z.B. auf den Boden fällt und eine Kraft auf die Handhabe und damit auch auf die Verbindung zwischen Handhabe und Betätigungsfortsatz einwirkt, die oben geschilderte Verbindungs- und Verriegelungsfunktion sicher.

Die erfindungsgemäße starre Verbindung über den mit Hinterschneidungsflächen versehenen Fortsatz ist also in der Lage, relativ große Kräfte aufzunehmen, so daß die Gefahr des Abbrechens des Fortsatzes bzw. der Handhabe wesentlich geringer ist. Darüber hinaus bietet die erfindungsgemäße Lösung aber auch den Vorteil, daß die Handhabe für den Fall der Beschädigung auf einfache Weise durch Bewegung entgegen der Federkraft in einen außerhalb des Funktionshubes liegenden Erweiterungsbereich der fensterartigen Öffnung herausnehmbar ist. Dies geschieht auf einfache Weise dadurch, daß außerhalb des Funktionshubes der Erweiterungsbereich der Öffnung so große Abmessungen aufweist, daß der Fortsatz die Wandung des Außenrohres nicht mehr hintergreifen kann.

Selbstverständlich wirkt sich dieser Vorteil auch bei der Bewegungsumkehrung aus, d.h. beim Einsetzen einer Handhabe. Dazu ist es nur noch notwendig, in der Ruhelage des Betätigungsansatzes den an der Handhabe angeformten Fortsatz in die entsprechende Aussparung des Betätigungsansatzes einzusetzen und mit Hilfe der Handhabe den Betätigungsansatz in einen außerhalb des Funktionshubes liegenden Erweiterungsbereich zu schieben. Dies wird dadurch möglich, daß der Fortsatz mindestens einen spitz zulaufenden Endabschnitt aufweist, der auch außerhalb des Erweiterungsbereiches der Öffnung teilweise in der Lage ist, in die Aussparung des Betätigungsansatzes hineinzuragen, wobei sich eine formschlüssige Verbindung zwischen Handhabe und Betätigungsansatz ergibt. Im Erweiterungsbereich taucht der Fortsatz dann vollständig in die Öffnung des Außenrohres sowie in die Aussparung im Betätigungsansatz ein und beim Zurückgleiten in die Ruheposition der Feder bzw. in die Verriegelungsstellung bewegen sich die Hinterschneidungsflächen des Fortsatzes unter den Außenrand der fensterartigen Öffnung. Damit wird die Handhabe unverlierbar am Außenrohr gehalten.

Bei einer vorteilhaften Ausführungsform der Erfindung weist die zur Wandung des Außenrohrs weisende Unterfläche der Angabe mehrere Fortsätze auf, wobei deren Lage zueinander in einer Korrelation zu der Lage der Erweiterung in der fensterartigen Öffnung bestehen. Durch die Anordnung von mehreren Fortsätzen wird die Stabilität der Verbindung zwischen Handhabe und Außenrohr deutlich erhöht, so daß die Handhabe auch größeren an derselben angreifenden Kräften standhält.

Bei einer weiteren Ausführungsform ist am Führungskörper ein in eine Rastöffnung des Außenrohres eingreifendes Rastelement angeordnet, wobei das Rastelement auf einer dreiseitig aus der Außenrohrwandung freigeschnittenen Rastzunge angeformt ist. Dieses Rastelement dient zur funktionsgerechten Positionierung der fensterartigen Öffnung in Bezug zum Betätigungsansatz und des weiteren zur Axialsicherung von Innen- und Außenrohr.

Bei einer bevorzugten Ausführungsform ist darüber hinaus ein Abschlußelement vorhanden, welches mit einem eingezogenen Endbereich sowie dem zugeordneten Flansch des Führungskörpers klemmverbunden ist. Das Zusammenwirken von Abschlußelement und eingezogenen Endbereich des Außenrohres dient dabei als zusätzliche Axialsicherung zwischen Innen- und Außenrohr.

Weitere Vorteile und erfindungswesentliche Merkmale ergeben sich aus den Unteransprüchen sowie aus dem in den Zeichnungen dargestellten Ausführungsbeispiel. Es zeigen:
Fig. 1 einen Längsschnitt durch ein teleskopierbares Staubsauger-Saugrohr mit Betätigungs- und Arretierungsvorrichtung,
Fig. 2 eine Draufsicht auf den Führungskörper einschließlich Betätigungsansatz und Stabfeder,
Fig. 3 eine Unteransicht einer Handhabe gemäß dem mit III bezeichneten Ansichtspfeil in Fig. 4,
Fig. 4 eine Seitenansicht derselben Handhabe gemäß dem mit IV bezeichneten Ansichtspfeil in Fig. 3
Fig. 5 eine Draufsicht auf die fensterartige Öffnung im Außenrohr ohne Handhabe,
Fig. 6 einen Querschnitt gemäß der Schnittlinie VI-VI in Fig. 5 bei eingesetzter Handhabe,
Fig. 7 einen Querschnitt durch das Staubsaugerrohr in einer außerhalb des Funktionshubes befindlichen Stellung von Betätigungsansatz und Handhabe und
Fig. 8 einen Längsschnitt durch das in Fig. 1 vereinfacht dargestellte Abschlußelement einschließlich des Außenrohrendes.

In den Zeichnungen ist ein teleskopierbares Staubsauger-Saugrohr insgesamt mit der Bezugsziffer 10 bezeichnet.

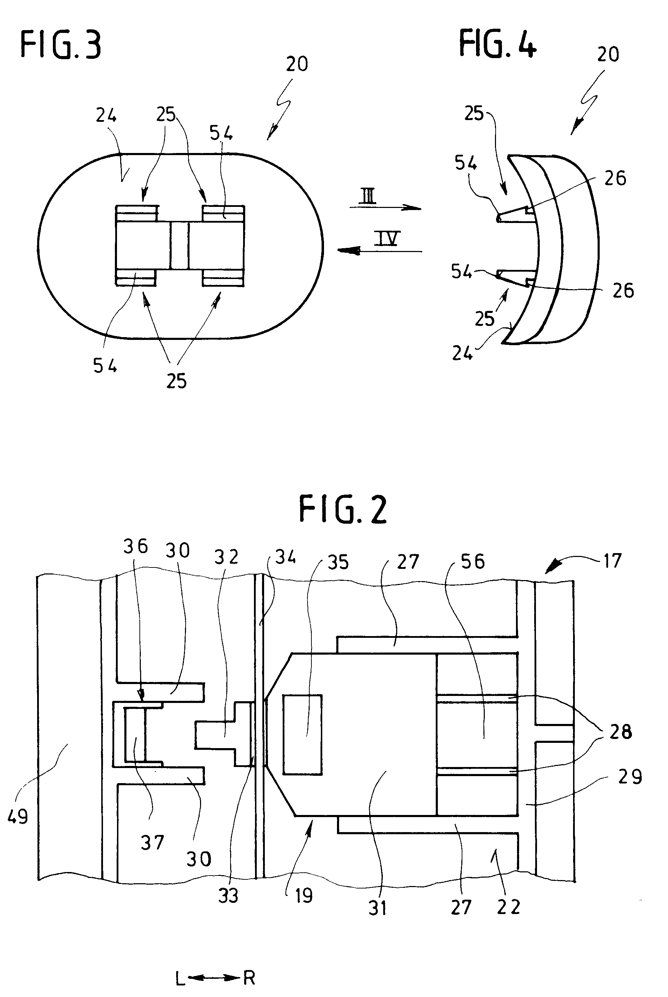

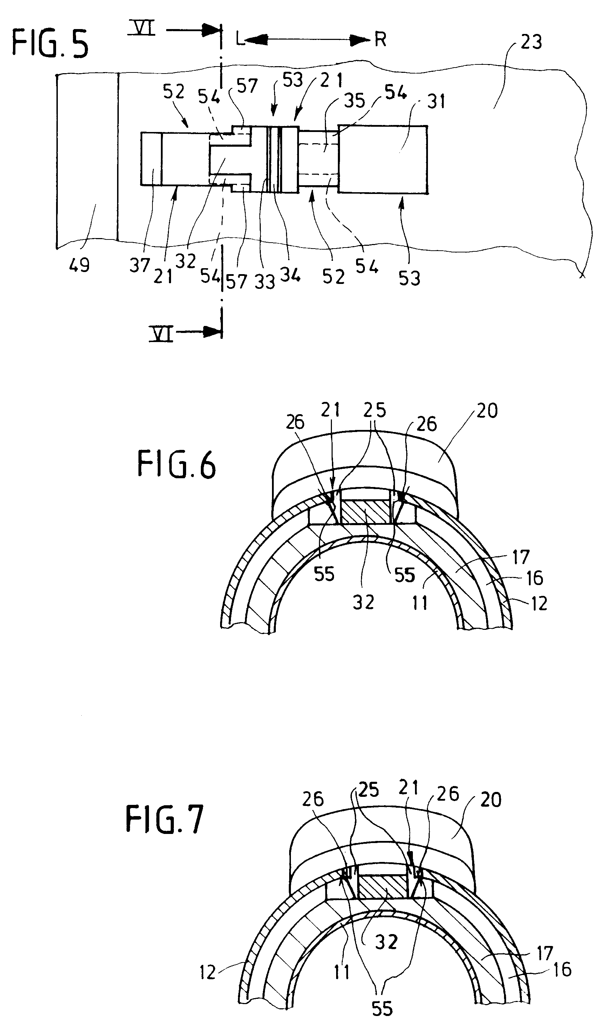

Das Saugrohr 10 weist ein Innenrohr 11 und ein Außenrohr 12 auf. Das Außenrohr 12 ist an seinem dargestellten Ende mit einer muffenartigen Aufweitung 13 versehen. In dem zwischen Innenrohr-Außenmantelfläche 14 und Außenrohr-Innenmantelfläche 15 befindlichen Freiraum 16 ist ein im Querschnitt im wesentlichen kreisförmiger Führungskörper 17 aus Kunststoff angeordnet. Im Führungskörper 17 ist ein entlang der Rohrlängsachse X bewegbarer Schieber 18 gehalten, der aus einem Betätigungsansatz 19 und einer Handhabe 20 besteht. Wie Fig. 3 und 4 zeigen, weist die Handhabe 20 eine an die Außenrohr-Außenmantelfläche 23 angepaßte Unterfläche 24 auf, an der vier Verbindungsfüßchen 25 befestigt sind. Die Verbindungsfüßchen 25 sind jeweils mit einer nach außen weisenden Hinterschneidungsfläche 26 versehen.

Fig. 2 zeigt eine Draufsicht auf den in einer Führungsbahn 56 am Führungskörper 17 beweglich angeordneten Betätigungsansatz 19. Der Betätigungsansatz 19 wird einerseits durch am Führungskörper 17 angeformte Randleisten 27 und durch Führungsschienen 28 an der Umfangsfläche 22 des Führungskörpers 17 geführt. Den Führungsschienen 28 gegenüberliegend sind an einer zur Umfangsfläche 22 des Führungskörpers 17 weisenden Fläche 38 des Betätigungsansatzes 19 entsprechende, nicht dargestellte Nuten angeordnet, in die die Führungsschienen 28 eingreifen. Die Führung des Betätigungsansatzes 19 wird durch am Führungskörper 17 angeformte Anschläge 29 und 30 komplettiert.

Der Betätigungsansatz 19 besteht aus einem flachen, der Oberflächenform des Führungskörpers 17 angepaßten gewölbten Kunststoffteil mit einem nahezu quadratischen Grundkörper 31 und einem mit dem Grundkörper 31 verbundenen T-förmigem Fortsatz 32. Zwischen dem Grundkörper 31 und dem T-förmigen Fortsatz 32 ist eine Quernut 33 angeordnet, die eine dem Kreisumfang des Führungskörpers angepaßte kreisförmig gekrümmte Stabfeder 34 aufnimmt. Der Grundkörper 31 weist darüber hinaus eine rechteckige Aussparung 35 auf. Dem T-förmigen Fortsatz 32 gegenüberliegend ist aus dem Führungskörper 17 eine Rastzunge 36 dreiseitig freigeschnitten, die einen länglichen Rastvorsprung 37 aufweist.

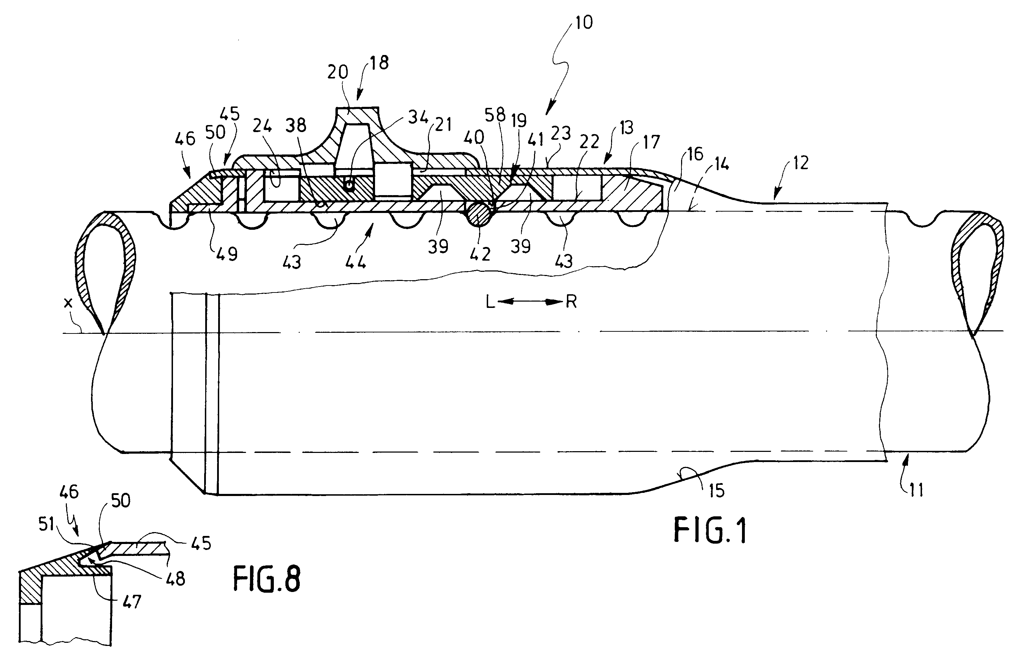

Fig. 1 zeigt des weiteren, daß der Betätigungsansatz 19 auf seiner zur Umfangsfläche 22 des Führungskörpers 17 weisenden Fläche 38 zwei Hohlräume 39 aufweist, zwischen denen eine Rippe 58 mit einer Verriegelungsfläche 40 angeordnet ist. Im Bereich der Führungsbahn 56 des Betätigungsansatzes 19 ist der Führungskörpers 17 mit einer quer verlaufenden Öffnung 41 für einen Wälzkörper 42 versehen. Wie in Fig. 1 dargestellt, ist der Wälzkörper 42 in der Verriegelungsstellung in einer Rastausnehmung 43 gehalten, die Teil einer in die Wandung des Innenrohres 11 eingeformten Rastleiste 44 ist.

Fig. 1 und Fig. 8 zeigen, daß der Freiraum 16 zwischen der Innenrohr-Außenmantelfläche 14 und der Außenrohr-Innenmantelfläche 15 am offenen Ende 45 des Außenrohres durch eine Abschlußkappe 46 abgeschlossen ist, die u.a. als axialfeste Verbindung zwischen dem Führungskörper 17 und dem Außenrohr 12 dient. Die Abschlußkappe 46 weist eine innere und eine äußere Abschlußlippe 47 und 48 auf. An der Innenseite der inneren Abschlußlippe 48 sind nicht dargestellte Rastrillen angeordnet, die mit den ebenfalls nicht dargestellten Rastrillen eines Flanschabschnittes 49 des Führungskörpers 17 zusammenwirken können. Dies geschieht, indem die Abschlußkappe 46 auf den Flansch 49 aufgeschoben bzw. gepreßt wird. Dabei wird ein eingezogener Endabschnitt 50 des Außenrohrendes 45 zwischen die Abschlußlippen 47 und 48 geschoben, wobei es zu einer Klemmverbindung zwischen der Abschlußlippe 47 und dem eingezogenen Endbereich 50 des Außenrohres 17 kommt. Auch legt sich die äußere Abschlußlippe 47, deren Endbereich 51 sich verjüngt, so an den eingezogenen Endabschnitt 50 des Außenrohres 45 an, daß ein harmonischer, staubdichter Übergang entsteht.
Während das Innenrohr 11 über eine nicht dargestellte, am Innenumfang des Führungskörpers 17 angeordnete, in eine Längsnut des Innenrohres 11 eingreifende Feder mit dem Führungskörper 17 axial fest verbunden ist, erfolgt die Verbindung zwischen Führungskörper 17 und Außenrohr 12 über die Abschlußkappe 46 in bereits geschilderter Weise, den Rastvorsprung 37 sowie durch die die Aussparung 21 durchgreifende Handhabe 20. Die letztgenannte axiale Verbindung wird aus Fig. 5 deutlich. Sie zeigt, daß die fensterartige Öffnung 21 eine insgesamt längliche Form besitzt und in Schmalbereiche 52 und Erweiterungsbereiche 53 unterteilt ist. Des weiteren ist zu erkennen, daß der zuvor schon beschriebene, auf einer Rastzunge 36 angeordnete Rastvorsprung 37 im Endbereich des Schmalabschnittes 52 mit dem Außenrohr 12 verrastet ist. Diese Verrastung dient ebenfalls der Axialsicherung zwischen Außenrohr 12 und Führungskörper 17 und garantiert darüber hinaus auch die richtige Orientierung der fensterartigen Öffnung 21 zum Betätigungsansatz 19, welcher zumindest teilweise auch in der Draufsicht (Fig. 5) auf die fensterartige Öffnung 21 zu sehen ist. So erkennt man den T-förmigen Fortsatz 32, teilweise den Grundkörper 31 sowie die Aussparung 35 im Grundkörper 31. Letztendlich ist auch die in der Quernut 33 geführte Stabfeder 34 zu sehen.

Um nun die auch als Axialsicherung dienende Handhabe 20 mit dem Betätigungsansatz 19 zu kuppeln, wird die Unterfläche 24 der Handhabe 20 so auf die fensterartige Öffnung 21 gesetzt, daß die vorderen beiden und die hinteren beiden Verbindungsfüßchen 25 - wie in Fig. 5 gestrichelt dargestellt - mit ihren jeweiligen spitz zulaufenden Endabschnitten 54 geringfügig in den zwischen dem T-förmigen Fortsatz 32 und dem Rand des Außenrohres 12 sich ergebenden Zwischenraum 57 und in die rechteckige Aussparung 35 des Betätigungsansatzes 19 eingreifen. Durch das Eintauchen der Endabschnitte 54 der Verbindungsfüßchen 25 in den Betätigungsansatz 19 sind nunmehr der Betätigungsansatz 19 sowie die Handhabe 20 bewegungsmäßig miteinander gekuppelt. Bei Ausübung einer Kraft auf die Handhabe 20 in Richtung des Pfeils R wird daher der Betätigungsansatz 20 über die Verbindungsfüßchen 25 bewegungseinheitlich in oben genannter Richtung mitbewegt. Um nun die Handhabe 20 unverlierbar mit der Gesamtvorrichtung zu verbinden, wird die über die Verbindungsfüßchen 25 formschlüssig mit dem Betätigungsansatz 19 verbundene Handhabe 20 in Richtung des Pfeiles R entgegen der Kraft der Stabfeder 34 in eine außerhalb des Funktionshubes liegende Position geschoben. Wenn sich die Füßchen 25 vollständig jeweils in den Erweiterungsbereichen 53 der Aussparung 21 befinden, können dieselben durch leichten, zusätzlichen Druck auf die Handhabe vollständig in die Aussparung 35 sowie in den Zwischenraum 57 eintauchen. Bei Reduzierung des Fingerdrucks auf die Handhabe 20 wird nun dieselbe und der bewegungseinheitlich damit gekuppelte Betätigungsansatz 19 durch die Kraft der Stabfeder 34 in Richtung des Pfeiles L zurückbewegt. Dabei gleiten die Hinterschneidungsflächen 26 der Verbindungsfüßchen 25 unter Hinterschneidungsflächen 55 des Außenrohres 12. Damit ist die Handhabe 20 einerseits mit dem Außenrohr 12 und andererseits mit dem Betätigungsansatz 19 verbunden.

Anhand Fig. 1 können nunmehr auch die beiden Entriegelungspositionen und die eine Verriegelungsposition des Betätigungsansatzes 19 bzw. der Handhabe 20 beschrieben werden. In Fig. 1 ist die sogenannte Verriegelungsposition dargestellt, die mit der Ruhelage der Stabfeder 34 übereinstimmt. In diesem Fall wird der Wälzkörper 42 in der Rastausnehmung 43 der Rastleiste 44 sowie der Öffnung 41 im Führungskörper 17 gehalten, wobei die Öffnung 41 durch die Verriegelungsfläche 40 des Betätigungsansatzes 19 abgedeckt wird. Falls in einer Längsrichtung L oder R eine Kraft versucht, die Teleskoprohre 11, 12 auseinanderzuziehen, wird diese Bewegung durch den, wie oben beschrieben, festgeklemmten Wälzkörper 42 blockiert.

Wird nun die Handhabe 20 einschließlich des bewegungsabhängig gekoppelten Betätigungsansatzes 19 in Richtung L oder R bewegt, so verschiebt sich die Verriegelungsfläche 40 und eine der beiden Hohlräume 39 ist oberhalb der Öffnung 41, und damit oberhalb des Wälzkörpers 42 angeordnet. Falls nunmehr versucht wird, die Teleskoprohre 11, 12 auseinanderzuziehen, kann der Wälzkörper 42 nach oben in den Hohlraum 39 ausweichen, so daß ein Auseinanderziehen von Innen- und Außenrohr 11, 12 problemlos möglich ist. Dabei ist es wichtig, daß beidseitig der Verriegelungsposition jeweils eine Entriegelungsposition vorhanden ist.

Bei Beschädigung der aus dem Außenrohr 12 hinausragenden Handhabe 20 kann diese nunmehr ebenfalls leicht ausgewechselt werden. Dazu ist es nur notwendig, die Handhabe 20 aus der in Fig. 1 und 6 gezeigten Position in Richtung des Pfeiles R in eine außerhalb der Entriegelungsposition liegenden Stellung zu bewegen, also in einen Bereich außerhalb des Funktionshubes. Diese Position ist dadurch gekennzeichnet, daß sich die Hinterschneidungsflächen 26 der Verbindungsfüßchen 25 nicht mehr unter den Hinterschneidungsflächen 55 des Außenrohres 12 befinden (s. Fig. 7), so daß durch leichtes Anheben der Handhabe 20 dieselbe vom Betätigungsansatz 19 entkuppelt werden kann. Gleichzeitig mit dem Entkuppeln gleitet der Betätigungsansatz 19 auf Grund der Federkraft in die Ruhelage der Stabfeder 34, und damit in die Verriegelungsstellung von Innen- und Außenrohr 11, 12 zurück.

## Patentansprüche

1. Teleskopierbares Staubsauger-Saugrohr (10) mit einem endseitig eine muffenartige Aufweitung aufweisenden, mit einer fensterartigen Öffnung (21) versehenen Außenrohr (12) mit einem Innenrohr (11), welches eine sich axial erstreckende Rastleiste aufweist und einen zwischen Innen- und Außenrohr (11, 12) in der Aufweitung angeordneten Führungskörper (17), an dem ein Betätigungsansatz (19) eines Schiebers (18) in beiden Rohrlängsrichtungen jeweils entgegen der Kraft einer Feder (34) geführt ist, wobei eine durch Fingerdruck bewegbare Handhabe (20) des Schiebers (18) durch die fensterartige Öffnung (21) hindurchsteckbar und mit dem Betätigungsansatz (19) bewegungseinheitlich verbindbar ist, dadurch gekennzeichnet, daß die bewegungseinheitlich formschlüssig mit dem Betätigungsansatz (19) gekuppelte Handhabe (20) mit mindestens einem Hinterschneidungsflächen (26) aufweisenden Fortsatz (25) in einem Führungsschlitz (52) der fensterartigen Öffnung (21) längsverschieblich gehalten ist, und daß die Handhabe (20) durch Bewegung entgegen der Federkraft in einen außerhalb des Funktionshubes liegenden Erweiterungsbereich (53) der fensterartigen Öffnung (21) herausnehmbar ist.

2. Teleskopierbares Staubsaugerrohr nach Anspruch 1, dadurch gekennzeichnet, daß der Fortsatz (25) ein in Ruhelage der Feder (34) in eine Aussparung (35; 57) des Betätigungsansatzes (19) formschlüssig eingreifenden Endabschnitt (54) aufweist, mit Hilfe dessen der aus Betätigungsansatz (19) und Handhabe (20) bestehende Schieber (18) in den Erweiterungsbereich (53) der Öffnung (21) bewegbar ist.

3. Teleskopierbares Staubsaugerrohr nach Anspruch 1 und 2, dadurch gekennzeichnet, daß an der zur Wandung des Außenrohres (12) weisenden Unterfläche (24) der Handhabe (20) mehrere Fortsätze (25) angeordnet sind.

4. Teleskopierbares Staubsaugerrohr nach den Ansprüchen 1 bis 3, dadurch gekennzeichnet, daß die fensterartige Öffnung (21) mehrere Erweiterungen (53) aufweist, deren Lage zueinander in einer Korrelation zur Verteilung der Fortsätze (25) stehen.

5. Teleskopierbares Staubsaugerrohr nach den Ansprüchen 1 bis 4, dadurch gekennzeichnet, daß an der Unterfläche (24) der Handhabe (20) vier Fortsätze (25) angeordnet sind, von denen sich jeweils zwei gegenüberliegen und daß die Fortsätze (25) widerhakenförmig mit Hinterschneidungsflächen (26) und im wesentlichen spitz zulaufenden Endabschnitten (54) ausgebildet sind.

6. Teleskopierbares Staubsaugerrohr nach Anspruch 1, dadurch gekennzeichnet, daß zur funktionsgerechten Positionierung der fensterartigen Öffnung (21) in Bezug zum Betätigungsansatz (19) und zur Axialsicherung von Innen- und Außenrohr (11; 12) am Führungskörper (17) ein in eine Rastöffnung des Außenrohres (12) eingreifendes Rastelement (37) angeordnet ist.

7. Teleskopierbares Staubsaugerrohr nach Anspruch 6, dadurch gekennzeichnet, daß das Rastelement (37) auf einer dreiseitig aus der Außenrohrwandung freigeschnittenen Rastzunge (36) angeordnet ist.

8. Teleskopierbares Staubsaugerrohr nach Anspruch 6, dadurch gekennzeichnet, daß ein als zusätzliche Axialsicherung dienendes Abschlußelement (46) mit einem eingezogenen Endbereich (50) des Außenrohres (12) sowie dem zugeordneten Flansch (49) des Führungskörpers (17) klemmverbunden ist.

## Claims

1. Telescopically collapsible vacuum cleaner suction tube (10) with an outer tube (12) widened at one end like a socket end and provided with a window-like aperture (21), with an inner tube (11), which has an axially extending catch strip and a guide body (17) disposed in the widening between the inner and outer tube (11, 12), on which guide body an actuating lug (19) of a slide (18) is guided in both longitudinal directions of the tube, in each case against the force of a spring (34), wherein a handle (20) of the slide (18) movable by finger-pressure is capable of being inserted through the window-like aperture (21) and of being connected in motion to the actuating lug (19), characterised in that the handle (20) coupled in motion by positive locking to the actuating lug (19) is held longitudinally displaceably in a guide slot (52) of the window-like aperture (21) by at least one projection (25) having undercut faces (26), and in that the handle (20) is removable by movement against the force of the spring into an extension region (53) of the window-like aperture (21) outside the operating stroke.

2. Telescopically collapsible vacuum cleaner tube according to claim 1, characterised in that the projection (25) has an end section (54) engaging with positive locking in a recess (35; 57) in the actuating lug (19) in the rest position of the spring (34), by means of which end section the slide (18) consisting of the actuating lug (19) and handle (20) is movable into the extension region (53) of the aperture (21).

3. Telescopically collapsible vacuum cleaner tube according to claim 1 and 2, characterised in that a plurality of projections (25) are disposed on the sole (24) of the handle (20) facing the wall of the outer tube (12).

4. Telescopically collapsible vacuum cleaner tube according to claims 1 to 3, characterised in that the window-like aperture (21) has a plurality of extensions (53), whose position relative to one anther correlates with the distribution of the projections (25).

5. Telescopically collapsible vacuum cleaner tube according to claims 1 to 4, characterised in that four projections (25) are provided on the sole (24) of the handle (20), arranged in opposing pairs, and in that the projections (25) are formed with undercut faces (26) acting as hook elements and with ends (54) tapering substantially to a point.

6. Telescopically collapsible vacuum cleaner tube according to claim 1, characterised in that a catch element (37) engaging in a catch aperture in the outer tube (12) is disposed on the guide body (17) for operational positioning of the window-like aperture (21) relative to the actuating lug (19) and for axially securing the inner and outer tubes (11; 12).

7. Telescopically collapsible vacuum cleaner tube according to claim 6, characterised in that the catch element (37) is disposed on a catch tongue (36) cut out on three sides from the outer tube wall.

8. Telescopically collapsible vacuum cleaner tube according to claim 6, characterised in that a sealing element (46) acting as an additional axial fixing is clamped to a reduced end region (50) of the outer tube (12) and to the associated flange (49) of the guide body (17).

## Revendications

1. Tube télescopique d'aspiration pour aspirateur de poussière (10) avec un tube extérieur (12) présentant à une extrémité un élargissement en manchon et pourvu d'une ouverture (21) en fenêtre, avec un tube intérieur (11) présentant une bande d'encliquetage s'étendant axialement et un corps de guidage (17) disposé dans l'agrandissement, entre tube intérieur et tube extérieur (11, 12), corps sur lequel est guidé un appendice d'actionnement (19) d'un curseur (18), dans chacune des deux directions longitudinales du tube, à l'encontre de la force exercée par un ressort (34), une manette (20) déplaçable par la pression d'un doigt, du curseur (18) pouvant être enfichée à travers l'ouverture (21) en fenêtre et être reliée de façon à donner un déplacement unitaire, à l'appendice d'actionnement (19),
caractérisé en ce que la manette (20) couplée avec ajustement de forme, de façon à donner un déplacement unitaire, à l'appendice d'actionnement (19) est maintenue de façon déplaçable longitudinalement, avec un prolongement (25) présentant au moins des surfaces en contre-dépouille (20), dans une forme de guidage (52) de l'ouverture en fenêtre (21), et en ce que la manette (20) peut être extraite par un déplacement agissant à l'encontre de la force d'un ressort dans une zone d'agrandissement (53) située à l'extérieur de la course fonctionnelle, de l'ouverture en fenêtre (21).

2. Tube télescopique d'aspiration pour aspirateur de poussière selon la revendication 1,
caractérisé en ce que le prolongement (25) présente une section d'extrémité (54) s'engageant avec ajustement de forme, dans la position de repos du ressort (34) dans un évidement (35; 57) de l'appendice d'actionnement (19), section à l'aide de laquelle le curseur (18) composé de l'appendice d'actionnement (19) et de la manette (20) est déplaçable dans la zone d'agrandissement (53) de l'ouverture (21).

3. Tube télescopique d'aspiration pour aspirateur de poussière selon les revendications 1 et 2,
caractérisé en ce que plusieurs prolongements (25) sont disposés sur la face inférieure, tournée vers la paroi du tube extérieur (12) de la manette (20).

4. Tube télescopique d'aspiration pour aspirateur de poussière selon les revendications 1 à 3,
caractérisé en ce que l'ouverture en fenêtre (21) présente plusieurs agrandissements (53) dont la position mutuelle est située en corrélation pour assurer un effet de graduation des prolongements (25).

5. Tube télescopique d'aspiration pour aspirateur de poussière selon les revendications 1 à 4,
caractérisé en ce qu'en face inférieure (24) de la manette (20) sont disposés quatre prolongements (25) dont deux sont chacun disposés l'un à l'opposé de l'autre et les prolongements (25) étant réalisés en forme de contre-crochet avec des faces en contre-dépouille (26) et des sections d'extrémité (54) sensiblement pointues.

6. Tube télescopique d'aspiration pour aspirateur de poussière selon la revendication 1,
caractérisé en ce qu'un élément d'encliquetage (37), s'engageant dans l'ouverture d'encliquetage du tube extérieur (12), est disposé afin d'assurer un positionnement fonctionnellement correct de l'ouverture en fenêtre (21) par rapport à l'appendice d'actionnement (19) et pour assurer une sécurité axiale entre les tubes intérieur et extérieur (11; 12) sur le corps de guidage (17).

7. Tube télescopique pour aspirateur de poussière selon la revendication 6,
caractérisé en ce que l'élément d'encliquetage (37) est disposé sur une languette d'encliquetage (36) produite par découpage sur trois cotés à partir de la paroi du tube extérieur.

8. Tube télescopique pour aspirateur de poussière selon la revendication 6,
caractérisé en ce qu'un élément de raccordement (46) servant de sécurité axiale supplémentaire est relié avec serrage à une zone d'extrémité (50) rétreinte du tube extérieur (12) ainsi qu'à la bride (49) associée du corps de guidage (17).
